# EUROPÄISCHE PATENTANMELDUNG

(11) **EP 2 756 905 A1**
(43) Veröffentlichungstag der Anmeldung: **23.07.2014**
(21) Anmeldenummer: 14151836.5
(22) Anmeldetag: 20.01.2014
(51) Int. Cl.: B23K 7/00, B23K 7/08, B23K 7/10, B23K 9/013, B23K 10/00, B23K 26/38, B23K 26/40, B23K 26/30

(54) **Verfahren zum thermischen Schneiden eines Werkstücks aus Stahl**

(30) Priorität: 18.01.2013 DE 102013000796
(71) Anmelder: Messer Cutting Systems GmbH, 64823 Gross-Umstadt (DE)
(72) Erfinder: Schneider, Wolfgang, 47249 Duisburg (DE); Vogelsang, Axel, 42653 Solingen (DE); Göller, Ingo, 64846 Gross-Zimmern (DE); Balcke, Ingmar, 64839 Muenster (DE)
(74) Vertreter: Staudt, Armin Walter

(57) **Zusammenfassung**

Bei einem bekannten Verfahren zum thermischen Schneiden eines Werkstücks aus Stahl wird mittels eines Schneidbrenners eine Schnittfläche erzeugt und die noch heiße Schnittfläche anschließend mittels eines Autogenbrenners erwärmt, um einem Abkühlen der Schnittfläche unterhalb der Martensitbildungstemperatur entgegenzuwirken. Um davon ausgehend ein Verfahren bereitzustellen, das mit geringem Aufwand eine reproduzierbare Erzeugung spannungsarmer Schnittflächen ermöglicht, wird erfindungsgemäß vorgeschlagen, dass das Abkühlen der Schnittfläche nach dem Erwärmen mittels des Autogenbrenners durch thermische Isolierung zusätzlich verlangsamt wird.

## Beschreibung

### Technischer Hinterarund

Die Erfindung betrifft ein Verfahren zum thermischen Schneiden eines Werkstücks aus Stahl, bei dem mittels eines Schneidbrenners eine Schnittfläche erzeugt wird und die noch heiße Schnittfläche anschließend mittels eines Autogenbrenners erwärmt wird, um einem Abkühlen der Schnittfläche unterhalb einer Martensitbildungstemperatur entgegenzuwirken.

Beim thermischen Schneiden von Werkstücken - im Folgenden auch als "Brennschneiden" bezeichnet - wird das Schneidwerkzeug, etwa ein Autogenbrenner, Plasmabrenner oder ein Laser, in Schnittrichtung über das Werkstück hinweggeschoben. Allen thermischen Schneidverfahren ist eine punktförmige Energieeinbringung und ein hochenergetischer Schneidstrahl gemeinsam.

### Stand der Technik

Die Schnittkante des Werkstücks nimmt infolge der Erwärmung und des nachfolgende schnellen Abkühlens häufig eine unerwünscht hohe Härte an und es können Spannungen entstehen, die zu Rissen führen können. Dieser Effekt ist auf Gefügeänderungen des Werkstoffs zurückzuführen. Bei schnellem Abkühlen kann es in einer schmalen Zone (hier auch als "Wärmeeinflusszone" bezeichnet) um die Schnittfläche zu Martensitbildung kommen, oder zu Ausscheidungen harter Phasen, wie Karbiden, Oxiden oder Nitriden. Dies gilt insbesondere für Vergütungsstähle mit erhöhtem Kohlenstoffgehalt.

Es ist daher bekannt, die Schnittkanten nachträglich thermisch zu behandeln, was als Weichglühen, Entspannen, Vergüten, Normalisieren oder Tempern bezeichnet wird. Zur Nachbehandlung kleinteiliger Werkstücke können diese vollständig in einem Ofen auf erhöhte Temperatur gebracht werden. Für großvolumige Werkstücke ist dies jedoch kaum praktikabel.

Stattdessen wird in der DE-PS 925 440, aus der ein Verfahren der eingangs genannten Gattung bekannt ist, vorgeschlagen, ein dem Schneidbrenner nachlaufendes Induktionsheizgerät vorzusehen, mit dem die Schnittfläche erwärmt wird. Schneidbrenner und Heizgerät sind dabei starr miteinander verbunden und bilden so eine Einheit. Dadurch können mit einem einzigen Gerät die Schnittkanten erzeugt und dabei entstandene harte Zonen durch unmittelbar anschließendes Aufheizen wieder beseitigt werden. Es wird erwähnt, dass anstelle des Induktionsheizgerätes auch ein Autogen- oder Gasbrenner zum Weichglühen eingesetzt werden kann.

Auch die DE 866 135 B lehrt, die Abkühlung hinter dem Schneidbrenner zu verlangsamen und die Martensitbildung zu verhindern, indem der Schneidbrenner einen Glühbrenner nachschleppt. Der Abstand der beiden Brenner liegt zwischen 100 und 150 mm, je nach Blechdicke.

Unter Bezugnahme auf die aus dieser Druckschrift bekannten Methode, die als nicht erfolgreich bezeichnet wird, schlägt auch die DE 1 020 045 A vor, dass der Schneidbrenner einen Wärmeerzeuger nachschleppt. Dabei wird der Abstand zwischen dem Schneidbrenner und dem Wärmeerzeuger so festgelegt, dass dessen Wärmezufuhr genügt, um die Temperatur solange nahezu isotherm zu halten, bis die unmittelbare Umwandlung des Austenits in Ferrit-Perlit vollzogen ist.

### Technische Aufgabenstellung

Bei den bekannten Methoden wird versucht, einem raschen Abkühlen der Schnittfläche durch kontinuierliche Wärmezufuhr mittels eines dem Schneidbrenner nachlaufenden Brenners entgegen zu wirken. Es hat sich aber gezeigt, dass durch Wärmezufuhr in die Schnittfläche nur mit hohem Aufwand die Umwandlung des Austenits in Martensit zu vermeiden ist, insbesondere wenn an die einzuhaltenden Härte der Schnittfläche hohe Anforderungen gestellt werden.

Es stellt sich daher die Aufgabe, ein verbessertes Verfahren bereitzustellen, das beim Brennschneiden mit geringem Aufwand und dennoch reproduzierbar die Erzeugung spannungsarmer Schnittflächen ermöglicht, die hinsichtlich ihrer Härte auch besonderes hohen Anforderungen genügen.

### Allgemeine Darstellung der Erfindung

Diese Aufgabe wird ausgehend von einem Verfahren der eingangs genannten Gattung erfindungsgemäß dadurch gelöst, dass das Abkühlen der Schnittfläche nach dem Erwärmen mittels des Autogenbrenners durch thermische Isolierung zusätzlich verlangsamt wird.

Beim Schneidvorgang durchläuft die an die Schnittkante angrenzende Zone des Werkstücks einen großen Temperaturbereich und erfährt eine gewisse, thermodynamisch und kinetisch bestimmte Umwandlung des kristallinen Gefüges. Die betroffene Zone, die Wärmeeinflusszone, ist in der Regel nur wenige Zehntel Millimeter breit (bis etwa 4/10 mm) und kühlt dementsprechend nach dem Schneidvorgang sehr schnell ab. Durch das schnelle Abkühlen der Wärmeeinflusszone kann ein bei hoher Temperatur entstandenes Gefüge auch bei Raumtemperatur entstehen oder erhalten bleiben, obwohl es thermodynamisch nicht stabil ist. Als Beispiel sei die Martensitbildung genannt. Ein Grundgedanke der Erfindung liegt darin, das schnelle Abkühlen nach dem Schneidvorgang soweit zu behindern, dass die Martensitbildung verhindert oder zumindest vermindert wird.

Im Gegensatz zum eingangs erläuterten Stand der Technik, bei dem ein Abkühlen der Schnittkante hingenommen wird und die dadurch eingesetzte Martensitbildung durch nachträgliches Glühen rückgängig gemacht werden muss, ist bei der Erfindung wie auch beim gattungsgemäßen Verfahren vorgesehen, dass die Abkühlung in der Wärmeeinflusszone verzögert wird. Die Wirkung der verzögerten Abkühlung der Schnittkante ist am einfachsten anhand von Umwandlungsdiagrammen, sogenannte ZTU-Schaubildern (Zeit-Temperatur-Umwandlung), zu erklären, die für alle gängigen Stähle existieren. In diesen Diagrammen sind für eine gegebene Temperatur die Zeiten (in logarithmischer Auftragung) bis zum Beginn einer Phasenumwandlung und deren Beendigung angeben. Es wird unterschieden zwischen isothermischen und kontinuierlichen ZTU-Schaubildern, wobei letztere das Umwandlungsverhalten des Stahls bei kontinuierlicher Abkühlung in Abhängigkeit von einer vorgegebenen Abkühlungsgeschwindigkeit angeben.

Da die Gefügeumwandlung in Perlit beziehungsweise Ferrit von Zeit und Temperatur abhängt, ist die Abkühlung der Wärmeeinflusszone sowohl in Bezug auf die Abkühlrate (=Abkühlungsgeschwindigkeit) als auch in Bezug auf die Temperaturdifferenz zu beachten. Die Abkühlrate soll möglichst niedrig sein, um der gewoll-ten Gefügeumwandlung genügend Zeit zu lassen, und der Temperaturabfall von der Maximal-Temperatur auf die kühlere Temperatur ohne Einwirkung des Schneidbrenners soll möglichst so gering sein, dass die Martensitbildungstemperatur nicht (sofort) erreicht wird.

Um diese unterschiedlichen Anforderungen zu erfüllen, sind beim erfindungsgemäßen Verfahren im Unterschied zum Stand der Technik auch zwei verschiedene Maßnahmen vorgesehen:
(a) Durch Wärmezufuhr mittels Autogenbrenner in die Schnittfuge beziehungsweise an die Schnittfläche.
   Durch das Beheizen der noch heißen Schnittfläche (genauer gesagt: der Schnittkante des Werkstücks) mit mindestens einem nachfolgenden Autogenbrenner wird ein rasches Abkühlen der erhitzten Schnittkante auf eine Temperatur unterhalb der Martensitbildungstemperatur verhindert. Diese Temperatur ist von der Zusammensetzung des Werkstück-Stahls abhängig und liegt typischerweise im Bereich von 500 bis 800 °C.
   Denn zum Beheizen wird erfindungsgemäß ein Autogenbrenner eingesetzt. Derartige Brenner zeichnen sich durch hohe Flammentemperaturen um typischerweise etwa 2850- 3200 °C aus und ermöglichen eine hohe Wärmeeinbringung in die Schnittfläche, was einen zu großen, raschen Temperaturabfall verhindert. Auf diese Weise wird im Bereich der Schnittfläche auch ohne weitere Einwirkung des Schneidbrenners ein großer Temperaturabfall verhindert und eine hohe Temperatur erzeugt.
(b) Durch Wärmedämmung der Schnittfuge beziehungsweise der Schnittfläche.
   Die hohe Temperatur wird möglichst lange aufrechterhalten, indem die Schnittfläche nach dem Beheizen mittels der Autogenbrenners thermisch isoliert wird. Dadurch wird die Temperatur in der Wärmeeinflusszone möglichst lange oberhalb der spezifischen Martensitbildungstemperatur gehalten.
   Diese Maßnahme ist nur während einer Zeitspanne wichtig, innerhalb der eine unmittelbare Umwandlung des bei hoher Temperatur vorliegenden austenitischen Gefüges in Ferrit und/oder in Perlit einsetzt oder im Idealfall abgeschlossen ist. Danach kann das weitere Abkühlen der Schnittfläche auf Raumtemperatur ohne Gefahr einer Gefügeumwandlung in Martensit erfolgen

Die gewünschte Wirkung erfordert eine Kombination der beiden Maßnahmen (a) und (b), nämlich der Wärmezufuhr in die Schnittfuge beziehungsweise an die Schnittfläche mittels Autogenbrenner und der nachgelagerten Wärmedämmung durch thermische Isolierung der Schnittfläche. Insbesondere die Wärmedämmung sorgt dafür, dass die Zeit beanspruchende Umwandlung des austenitischen Gefüges in Ferrit-Perlit erfolgen kann, bevor die Temperatur zu weit abgesunken ist und diese Umwandlung verhindert wird.

Die Wirkung der Kombination der beiden Maßnahmen (a) und (b) besteht somit darin, dass die Abkühlung zumindest in einer bis 2/10 mm dicken Zone, bevorzugt in einer bis 4/10 mm dicken Wärmeeinflusszone um die Schnittfläche so verzögert wird, dass eine Martensitumwandlung behindert und stattdessen ein Gefüge erzeugt wird, das bevorzugt kein Martensit enthält oder einen so geringen Anteil an Martensit in einer ansonsten ferritischen oder perlitischen Gefügephase, dass die Schnittfläche eine maximal zulässige Härte nicht überschreitet.

Die thermische Isolierung zwecks Verlangsamung der Wärmeabfuhr aus der Wärmeeinflusszone erfolgt im einfachsten Fall durch Einbringen des geschnittenen Werkstücks in einen thermisch isolierten Behälter. Diese Maßnahme ist jedoch nur für Schüttgut und Kleinteile jedoch nicht für große Werkstücke geeignet. Dafür hat es sich bewährt, wenn die Schnittfläche zwecks thermischer Isolierung vollständig oder teilweise abgedeckt wird.

Zur Abdeckung der Schnittfläche kann beispielsweise ein reflektierendes Bauteil dienen, vorzugsweise wird jedoch eine Isoliermatte eingesetzt.

Durch das Abdecken der Schnittfläche wird die Wärmeabstrahlung minimiert. Die Abdeckung überdeckt dabei vorzugsweise beide Schnittflächen der Schnittfuge, von denen nur eine die Schnittkante des zu bearbeitenden Werkstücks bildet und die andere in der Regel dem Materialabfall zuzurechnen ist. Diese "Schlechtseite" hat jedoch infolge des Schneidvorgangs und des nachfolgenden Erwärmens ebenfalls einen hohen Wärmeinhalt und er kann daher als Wärmequelle für die Schnittfläche auf der Werkstückseite dienen. Die Abdeckung umgibt im Idealfall die gesamte Schnittfuge oder die Schnittfläche; indem sie beispielsweise umwickelt wird. Am einfachsten gestaltet sich das Auflegen einer Abdeckung von oben, und zwar über die gesamte Länge der Schnittfuge oder einen Teil davon. Besonders vorteilhaft ist dabei eine Verfahrensvariante, bei der die Schnittfläche kontinuierlich mit ihrer Entstehung und unmittelbar nach dem Erwärmen durch den Autogenbrenner abgedeckt.

Die thermische Isolierung kann auf die Schnittfläche während einer Warmhaltedauer von mehreren Stunden einwirken, vorteilhafterweise während mindestens 2 Stunden. Im Fall einer Abdeckung verbleibt diese demnach bevorzugt mindestens 2 Stunden auf der Schnittfläche. Dadurch kann während der Warmhaltedauer die Temperatur im Bereich von 320 °C bis 520 °C gehalten werden, so dass sich eine dem sogenannten Anlassen entsprechende Wirkung einstellt. Diese besteht in einer zusätzlichen Verringerung der Härte, indem sich ein Gleichgewichtsgefüge aus Zementit und Ferrit einstellt.

Bei einer bevorzugten Verfahrensweise ist vorgesehen, dass der Schneidbrenner eine vorgegebene Schneidkontur erzeugt und dass der Autogenbrenner der Schneidkontur rechnergesteuert nachläuft.

Der Autogenbrenner läuft dem Schneidbrenner kontinuierlich nach. Im Gegensatz zum Stand der Technik, der einen dem Schneidbrenner nachlaufenden Heizbrenner mit starrer Verbindung lehrt, verfügt der Autogenbrenner hierbei jedoch über eine eigene Steuerung für den Bewegungsablauf zum Abfahren der Schneidkontur sowie über drehbare und gegenüber der Vertikalen verkippbare C-Achse. Darunter wird bei Werkzeugmaschinen die in Richtung der Werkzeugachse verlaufende Bearbeitungsachse verstanden wird. Da die C-Achse in einem Winkel von 360 ° endlos um die Werkzeugachse drehbar ist, kann der Autogenbrenner dem Schneidbrenner im vorgegebenen Abstand in allen Richtungen - in vollständiger Achsabführung -folgen. Dabei liegt die Bahn des nachlaufenden Autogenbrenners über der Schnittfuge, auch wenn diese einen von einer Geraden abweichenden Verlauf hat oder eine Fase aufweist. Konturen, die der nachlaufende Autogenbrenner nicht direkt überfährt, können auch durch einen zuschaltbaren Mehrflammenbrenner gezielt aufgewärmt werden. Dadurch gelingt es, dass der Autogenbrenner stets die gleiche Wärmemenge in die Schnittfläche einträgt und diese reproduzierbar auf eine hohe Temperatur einstellt.

Durch die Verkippbarkeit der C-Achse ist auch möglich, die Brennerflamme des Autogenbrenners - beispielsweise im Wechsel - auch auf die Schlechtseite der Schnittfuge zu richten, um auch dort das Material aufzuwärmen, so dass es als Wärmequelle für die Temperierung der eigentliche Werkstückschnittkante bei der thermischen Isolierung zur Verfügung steht.

Diese Verfahrensmodifikation wirkt sich somit auf die obige Maßnahme (a) vorteilhaft aus und trägt insgesamt dazu bei, dass die Wärmeeinflusszone ein definiertes Abkühlungsverhalten zeigt, was eine gut reproduzierbare Einstellung der Härte ermöglicht.

Weiterhin hat es sich als günstig erweisen, wenn als Autogenbrenner ein Mehrflammenbrenner eingesetzt wird, bei dem mehrere Brennerflammen entlang der Schnittfläche über eine Heizlänge von mindestens 50 mm, vorzugsweise über eine Heizlänge von 50 mm bis 150 mm, verteilt sind.

Mehrflammenbrenner haben zwei oder mehr Brennflammen. Im Vergleich zum punktförmigen Wärmeeintrag bei einem herkömmlichen Autogenbrenner zeigt ein derartiger Mehrflammenbrenner einen diffuseren Wärmeeintrag, der sich über eine vorgegebene Heizlänge entlang der Schnittfuge verteilt. Dadurch wird trotz großem Wärmeeintrag in die Schnittfuge - was einen zu großen Temperaturabfall und ein rasche Abkühlung verhindert - ein lokales Erhitzen auf eine hohe Temperatur vermieden, was zur erneuten Austenitbildung führen könnte.

Darüber hinaus ermöglicht ein derartiger Mehrflammenbrenner ein gezieltes und unabhängiges Aufwärmen beider Schnittflächen der Schnittfuge (rechte und linke Wärmeeinflusszone) in einem Arbeitsgang. Bei einer besonders vorteilhaften Ausführungsform verfügt der Mehrfachbrenner über einen beweglichen Brennerschaft, der eine Verstellung der Brennnerachse mit einem gegenüber der Vertikalen geneigten Winkel ermöglicht, so dass die Ausbreitungsrichtung und der Auftreffpunkt der Brennerflammen je nach Bedarf eingestellt und optimiert werden können.

Die Verfahrensmodifikation "Mehrflammenbrenner" sorgt somit ebenfalls für einen hohen und reproduzierbaren Wärmeeintrag in die Schnittfuge und wirkt sich somit auf die obige Maßnahme (a) vorteilhaft aus. Sie trägt insgesamt dazu bei, dass die Wärmeeinflusszone ein definiertes Abkühlungsverhalten zeigt, was eine gut reproduzierbare Einstellung der Härte ermöglicht.

### Ausführungsbeispiel

Nachfolgend wird die Erfindung anhand eines Ausführungsbeispiels näher erläutert.

Das erfindungsgemäße Verfahren ist beim Autogen-Brennschneiden eines Blechteils aus Baustahl erprobt worden. Bei dem Baustahl handelt es sich um einen niedrig legierten Stahl mit der Bezeichnung S460 NL (nach DIN EN 10025-3).

### Vergleichsbeispiel 1

Eine ebene Platte dieses Werkstoffs mit einer Dicke von 25 mm wurde mittels eines üblichen Autogen-Brennschneideverfahrens geschnitten.

Anschließend wurde an der Schnittkante des Werkstücks die Härte nach Vickers HV 10 gemessen. Dabei wurden 2 mm entfernt von der Blechoberseite, in der Blechmitte, und 3 mm von der Blechunterseite entfernt jeweils 5 Härteprüfungen durchgeführt. Dabei ergab sich ein maximaler Härtewert von 505 HV10 (gemessen in der Blechmitte).

### Vergleichsbeispiel 2

In Abwandlung des Verfahrens von Vergleichsbeispiel 1 wurde die vom Autogen-Schneidbrenner freigelegte Schnittfläche unmittelbar mittels eines im zeitlichen Abstand von ca. 2 s nachlaufenden Autogenbrenners auf eine hohe Temperatur gebracht und so das Abkühlen der Werkstückschnittkante verlangsamt.

Anschließend wurden an der Schnittkante des Werkstücks die Härteprüfungen nach Vickers wie beim Vergleichsbeispiel 1 vorgenommen. Dabei ergab sich ein maximaler Härtewert von 399 HV10 (gemessen in der Blechmitte)

### Beispiel 1

Das Verfahren nach Vergleichsbeispiel 2 wurde wie folgt abgewandelt:
(a) die vom Autogen-Schneidbrenner freigelegte Schnittfläche wurde unmittelbar mittels eines im zeitlichen Abstand von ca. 2 s nachgeführten Autogenbrenners auf die hohe Temperatur gebracht. Der dafür eingesetzte Autogenbrenner war als Mehrflammenbrenner mit drei Brennerdüsen ausgeführt, die sich über eine Länge von 100 mm entlang der Schneidfläche verteilten.
(b) Nach Durchlauf des Autogenbrenners wurde das geschnittene "Gutteil" in eine Kiste gegeben und komplett mit isolierendem Schüttgut, nämlich Perlit verdeckt. Dieses isolierende Schüttgut hat eine Wärmeleitfähigkeit von λ < 0,1 W/mK. Es verblieb auf der Schnittfläche ca. 12 Stunden. Infolge der thermischen Isolierung konnte die Temperatur der Schnittfläche hinreichend lang oberhalb von 320 °C gehalten werden.

Auf diese Weise konnte ein rasches Abkühlen der Schnittfläche bis zu einer Tiefe von mindestens 4/10 mm auf Martensitbildungstemperatur verhindert und stattdessen eine teilweise unmittelbare Umwandlung von Austenit in Ferrit oder Perlit erreicht werden.

Dies zeigte sich als Ergebnis der Härtemessung wie oben erläutert. Die maximale Härte wurde hier an der Blechunterseite gemessen und betrug 341 HV10.

### Beispiel 2

Das Verfahren nach Vergleichsbeispiel 2 wurde wie folgt abgewandelt:
(a) die vom Autogen-Schneidbrenner freigelegte Schnittfläche wurde unmittelbar mittels eines im zeitlichen Abstand von ca. 2 s nachgeführten Autogenbrenners auf die hohe Temperatur gebracht. Der dafür eigesetzte Autogenbrenner war als Mehrflammenbrenner mit drei Brennerdüsen ausgeführt, die sich über eine Länge von 100 mm entlang der Schneidfläche verteilten.
(b) Nach Durchlauf des Autogenbrenners wurde die Schnittfuge von oben unmittelbar mit einer Isoliermatte abgedeckt. Die Isoliermatte besteht aus Kohlenstoffgewebe mit einer Vliesfüllung und ist als sogenannte "Gießereimatte" im Handel erhältlich. Sie hat eine Wärmeleitfähigkeitskoeffizienten λ < 0,1 W/mK, eine Dicke von etwa 2 cm und eine Breite von 1 m. Sie bedeckte die Schnittfuge über ihre gesamte Länge und erstreckte sich seitlich über eine Breite von 50 cm über das Werkstück und über das Abfallstück. Die Isoliermatte verblieb auf der Schnittfläche während einer Warmhaltedauer von 4 Stunden. Infolge der thermischen Isolierung konnte die Temperatur der Schnittfläche während dieser Zeit oberhalb von 320 °C gehalten werden.

Auf diese Weise konnte ein rasches Abkühlen der Schnittfläche bis zu einer Tiefe von mindestens 4/10 mm auf Martensitbildungstemperatur verhindert und stattdessen eine teilweise unmittelbare Umwandlung von Austenit in Ferrit oder Perlit erreicht werden.

Dies zeigte sich als Ergebnis der Härtemessung wie oben erläutert. Die maximale Härte wurde hier an der Blechunterseite gemessen war vergleichbar mit der Härte der Probe von Beispiel 1.

### Beispiel 3

Bei einer weiteren Abwandlung von Vergleichsbeispiel 2 wurden folgende Maßnahmen getroffen.

Die vom Autogen-Schneidbrenner freigelegte Schnittfläche wurde unmittelbar mittels eines im zeitlichen Abstand von ca. 2 s nachlaufenden Autogenbrenners auf hohe Temperatur gebracht. Der dafür eingesetzte Autogenbrenner verfügte über eine eigene Steuerung für den Bewegungsablauf zum Abfahren der Schneidkontur sowie über eine drehbare und gegenüber der Vertikalen verkippbare C-Achse. Dadurch lag die Bahn des nachlaufenden Autogenbrenners auch bei einem von der Geraden abweichenden Verlauf oder einer Fase genau über der Schnittfuge.

Nach Durchlauf des Autogenbrenners wurde die Schnittfuge von oben unmittelbar mit einer Isoliermatte abgedeckt, wie anhand Beispiel 2 erläutert.

Auf diese Weise konnte die Schnittfläche reproduzierbar auf die hohe Temperatur gebracht und ein rasches Abkühlen der Schnittfläche bis zu einer Tiefe von mindestens 4/10 mm auf Martensitbildungstemperatur verhindert und stattdessen eine teilweise unmittelbare Umwandlung von Austenit in Ferrit oder Perlit erreicht werden.

Dies zeigte sich als Ergebnis der Härtemessung im Bereich einer Fase. Die maximale Härte wurde hier an der Blechunterseite gemessen und war vergleichbar mit der von Beispiel 1.

## Patentansprüche

1. Verfahren zum thermischen Schneiden eines Werkstücks aus Stahl, bei dem mittels eines Schneidbrenners eine Schnittfläche erzeugt wird und die noch heiße Schnittfläche anschließend mittels eines Autogenbrenners erwärmt wird, um einem Abkühlen der Schnittfläche unterhalb einer Martensitbildungstemperatur entgegenzuwirken, **dadurch gekennzeichnet, dass** das Abkühlen der Schnittfläche nach dem Erwärmen mittels des Autogenbrenners durch thermische Isolierung zusätzlich verlangsamt wird.

2. Verfahren nach Anspruch 1, **dadurch gekennzeichnet, dass** die Schnittfläche zwecks thermischer Isolierung vollständig oder teilweise abgedeckt wird.

3. Verfahren nach Anspruch 2, **dadurch gekennzeichnet, dass** zur Abdeckung der Schnittfläche eine Isoliermatte eingesetzt wird.

4. Verfahren nach einem der vorhergehenden Ansprüche, **dadurch gekennzeichnet, dass** die thermische Isolierung auf der Schnittfläche während einer Warmhaltedauer von mindestens 2 Stunden einwirkt.

5. Verfahren nach Anspruch 4, **dadurch gekennzeichnet, dass** infolge der thermischen Isolierung die Temperatur der Schnittfläche während der Warmhaltedauer im Bereich von 320 °C bis 520 °C gehalten wird.

6. Verfahren nach einem der vorhergehenden Ansprüche, **dadurch gekennzeichnet, dass** das Abkühlen der Schnittfläche bis zu einer Tiefe von mindestens 2/10 mm, vorzugsweise mindestens 4/10 mm auf eine Temperatur unterhalb einer Martensitbildungstemperatur während einer Zeitspanne verhindert wird, die ausreichend lang ist, um mindestens eine teilweise unmittelbare Umwandlung von Austenit in Ferrit oder Perlit zu gewährleisten.

7. Verfahren nach einem der vorhergehenden Ansprüche, **dadurch gekennzeichnet, dass** das Abkühlen der Schnittfläche auf eine Temperatur unterhalb einer Martensitbildungstemperatur während einer Zeitspanne verhindert wird, die ausreichend lang ist, um eine vollständige unmittelbare Umwandlung von Austenit in Ferrit oder Perlit zu gewährleisten.

8. Verfahren nach einem der vorhergehenden Ansprüche, **dadurch gekennzeichnet, dass** der Schneidbrenner eine vorgegebene Schneidkontur erzeugt und dass der Autogenbrenner der Schneidkontur rechnergesteuert nachläuft.

9. Verfahren nach einem der vorhergehenden Ansprüche, **dadurch gekennzeichnet, dass** als Autogenbrenner ein Mehrflammenbrenner eingesetzt wird, bei dem mehrere Brennerflammen entlang der Schnittfläche über eine Heizlänge von mindestens 50 mm, vorzugsweise über eine Heizlänge von 50 mm bis 150 mm, verteilt sind.
